Europäisches Patentamt

European Patent Office

Office européen des brevets

(11) Publication number: **0 209 180 B1**

(12) **EUROPEAN PATENT SPECIFICATION**

(45) Date of publication of patent specification: 30.09.92    (51) Int. Cl.⁵: **G06F 15/68**, H04N 5/21

(21) Application number: **86201167.3**

(22) Date of filing: **03.07.86**

(54) **Image enhancement circuit.**

(30) Priority: **09.07.85 NL 8501956**

(43) Date of publication of application:
**21.01.87 Bulletin 87/04**

(45) Publication of the grant of the patent:
**30.09.92 Bulletin 92/40**

(84) Designated Contracting States:
**DE FR GB**

(56) References cited:
**FR-A- 2 309 095**

**PATTERN RECOGNITION LETTERS, vol. 2, no. 2, December 1983, pages 95-99, Elsevier Science Publishers B.V., Amsterdam, NL; L.S. DAVIS et al.: "Image sequence enhancements based on the normal component of image motion"**

**W. K. PRATT: "Digital Image Processing", pages 434-437, A. Wiley-Interscience Publication, John Wiley & Sons, New York, US**

**H. BRUGGEMANN: "Temporal Filtering Using Pixel Incrementing", pages 686-694, SMPTE Journal, August 1981**

(73) Proprietor: **N.V. Philips' Gloeilampenfabrieken**
**Groenewoudseweg 1**
**NL-5621 BA Eindhoven(NL)**

(72) Inventor: **Herrmann, Jochem**
**c/o INT. OCTROOIBUREAU B.V. Prof. Holstlaan 6**
**NL-5656 AA Eindhoven(NL)**
Inventor: **Pelgrom, Marcellinus Johannes Maria**
**c/o INT. OCTROOIBUREAU B.V. Prof. Holstlaan 6**
**NL-5656 AA Eindhoven(NL)**

(74) Representative: **Kooiman, Josephus Johannes Antonius et al**
**INTERNATIONAAL OCTROOIBUREAU B.V.**
**Prof. Holstlaan 6**
**NL-5656 AA Eindhoven(NL)**

Rank Xerox (UK) Business Services

**Description**

A. Background of the invention

A(1). Field of the invention

The invention relates to an image enhancement circuit. Such circuits are used to give an image a high quality, starting from a plurality of quasi-stationary images of a low quality. For example, let it be assumed that a high-quality TV image is desired of an object which is at a long distance from a TV camera. When the atmosphere is quiet (as with light frost), this can generally be realised without any additional auxiliary means. However, if the atmosphere is very turbulent (as on very hot days) an image of a low quality is generally the result, with the desired image being highly degraded by noise. To obtain an image of high quality under such circumstances a plurality of low quality images of this object is processed in the image enhancement circuit.

Similar situations occur in scanning electron microscopy, X-ray fluoroscopy and in astronomy.

A(2). Description of the prior art

A known method of obtaining an image of high quality, starting from a series of low-quality images, is described on page 434 of reference 1. In this method the average value is calculated of the series of low-quality images. This may lead to the desired result, which is evident as follows. For the i-th low-quality image there applies:

$$G_i(x, y) = H(x,y) + N_i(x, y) \qquad (1)$$

In this equation $H(x,y)$ represents the desired high-quality image and $N_i(x,y)$ represents an additive noise image which is independent of the high-quality image. When the desired high-quality image is constant for a series of M low-quality images, there applies that:

$$H(x, y) = \frac{1}{M} \sum_{i=1}^{M} G_i(x, y) - \frac{1}{M} \sum_{i=1}^{M} N_i(x, y) \qquad (2)$$

For a high value of M the noise term in the right-hand member approximates to zero under normal circumstances, so that:

$$H(x, y) = \frac{1}{M} \sum_{i=1}^{M} G_i(x, y) \qquad (3)$$

As a high-quality image signal has to be produced within a finite time interval, the number M must be limited. This means that suppression of the noise component is also limit. In practice it turns out that the noise component in the high-quality image signal is about 1/M times the original noise component.

As described on page 686 of reference 2, a draw back of this image enhancement method is that the desired brightness of the image cannot be obtained until after all M weighted low-quality image signals have been accumulated. A further drawback of this known method is that the optimum value for M is not always known in advance. In fact this value will be greatly dependent on the actual circumstances.

Another image enhancement method is described in reference 3. To reduce the noise component, it is generally suggested therein that an enhanced image is reconstructed from a series of low-quality images $G_1$, $G_2$, ... $G_N$ by first average images $G_1$ and $G_2$ to produce an average image $G_{1,2} = (G_1 + G_2)/2$. Next apply this averaging technique to $G_{1,2}$ and $G_3$ to produce an average image $G_{1,3} = (G_{1,2} + G_3)/2$. Continuation of this method leads to an enhanced version of the series of low-quality images.

Still another image enhancement method is described in reference 4. There it is suggested that a "prediction image" signal is subtracted from each of the successive low-quality images signals and that the difference image signal be processed in the way disclosed in reference 1. This means that each difference image signal is multiplied by a weighting factor 1/K and that all weighted difference image signals are accumulated. The accumulated difference image signals constitute the "prediction" image signal and the desired output image signal. The output image signal will be of high quality only after M successive low-quality image signals being processed. In this known method the weighting factor 1/K can have two values. The one value is 1 and is used when the amplitude of the difference image signal is above a predetermined threshold. The other value is some value smaller than 1 which is used when the amplitude of the difference image signal is below that threshold.

The disadvantages of the image enhancement methods described in references 3 and 4 is that on the one hand the noise component present in the high-quality image signal cannot be reduced to a level below N/M wherein N is the noise component present in the original low-quality image signal and M is the weighting factor which in the case of reference 3 is equal to two and which in the case of reference 4 is equal to 1 or K. On the other hand, with these image enhancement methods, the maximal noise reduction is obtained after M accumulations only.

## B. Object and summary of the invention

It is an object of the present invention to provide an image enhancement circuit, of the type disclosed in reference 4, which for converting a series of quasi-stationary low-quality image signals into a high quality image signal comprises a difference producing circuit receiving the successive low-quality image signals of the series and the successive prediction image signals of a series of prediction image signals and producing a series of difference image signals; a weighting network receiving the successive difference image signals of said series of difference image signals for multiplying each such difference image signal with a predetermined weighting factor to produce weighted difference image signals, an accumulator circuit for accumulating the weighted difference image signals and producing said series of prediction image signals, but which does not have the drawbacks of the above described circuits.

To this end, in the image enhancement circuit according to a first embodiment of the present invention the weighting factor for multiplying the actual difference image signal applied thereto depends upon the ordinal number of that difference image signal in the series of difference image signals, and is equal to the reciprocal value of the ordinal number of that difference image signal.

In other words when the ordinal number of the difference image signal is indicated i, the weighting factor of that difference image signal can be set to 1/i, so that the successive weighting factors form the series 1, 1/2,1/3, 1/4, 1/5, 1/6, ...

In the image enhancement circuit according to a second embodiment of the present invention the weighting factors are chosen to be equal to integral negative powers of a two, particularly as follows:

$$k(i) = 2^{-RND[^2\log i]} \qquad (4)$$

In this equation RND represents a rounding-off operation; in other words RND[$^2\log i$] is the rounded-off value of $^2\log i$. The weighting factors determined in this manner successively have the value

1, 1/2, 1/4, 1/4, 1/4, 1/8, 1/8, 1/8, 1/18,     (5)

Using such monotonically decreasing weighting factors for the successive difference image signals, the image signal stored in the accumulator will have the optimum brightness at any moment, and the noise component decreases continuously so that the accumulation process may be stopped as soon as the noise component is sufficiently suppressed.

It is true that the image enhancement circuit according to the second embodiment theoretically does not yield the same image quality as in the case that k(i) = 1/i, but in practice the difference in quality can hardly be ascertained, also because the accumulation process is not to be stopped after a given period, and the weighting circuit can then considerably be simplified.

## C. References

1. Digital Image Processing; W. K. Pratt; John Wiley and Sons 1978 (ISBN 0-471-01888-0).
2. Temporal Filtering Using Pixel Incrementing; H. Bruggeman; Journal of the Society of Motion Picture and Television Engineers, August 1981, pages 686-694.
3. Image sequence enhancements based on the normal component of image motion; L.S. Davis et al.; Pattern Recognition Letters, Vol. 2, No. 2, December 1983, pages 95-99

4. FR-A-2309095

D. Brief description of the Figures

Fig. 1 shows a television recording and display system provided with an image enhancement circuit according to the invention;
Fig.2 and Fig. 3 show embodiments of an image enhancement circuit.

E. Description of the embodiments

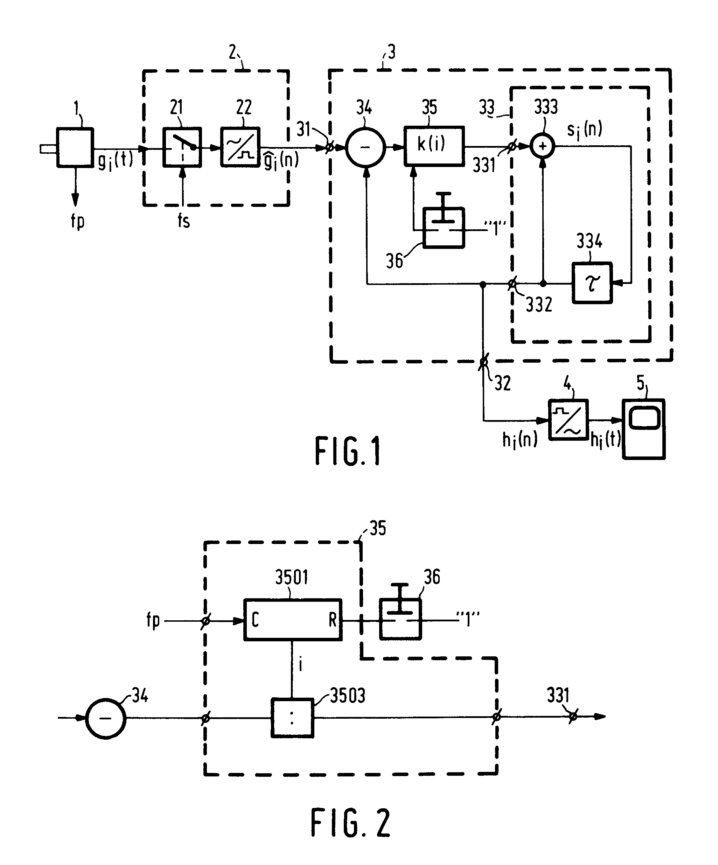

Fig. 1 shows a TV system. It comprises a TV camera 1 which converts a series of images $G_i(x, y)$ of one and the same objectsat a rate of, for example, 25 Hz into a series of analogue image signals $g_i(t)$. Reference i represents the ordinal number of the image signal. For this conversion the image $G_i(x, y)$ is scanned in accordance with a line pattern. After the image $G_i(x, y)$ is scanned and the image signal $g_i(t)$ is obtained, the image will have changed slightly. This new image will be indicated by $G_{i+1}(x, y)$ and after scanning by the TV camera it yields the image signal $g_{i+1}(t)$. In addition to these image signals,the TV camera supplies a frame-synchronising pulse $f_p$ whenever scanning of a new image is started.

The analogue image signals $g_i(t)$ thus obtained are converted in a circuit 2 into time-discrete image signals $\hat{g}_i(n)$. To this end this circuit 2 includes a sampler 21 which is controlled by sampling pulses occurring at a rate $f_s$ of, for example, 13.5 MHz. In the embodiment shown this circuit 2 furthermore includes an analogue-to-digital converter 22 in which each image signal sample thus obtained is converted into a code word of, for example, 7 bits.

The time-discrete image signals which are supplied by the circuit 2 are applied to the input 31 of the image enhancement circuit 3. The output 32 thereof is connected to the monitor 5 via a digital-to-analogue converter 4.

The image enhancement circuit 3 has an accumulator 33 which in response to the i-th image signal $\hat{g}_i(n)$ yields the i-th approximation $h_i(n)$ of the desired image signal $h(n)$ which is the time-discrete signal representation of the image $H(x, y)$. This accumulator has an input 331, an output 332, an adder circuit 333 having a first input connected to the input 331 of the accumulator and a second input connected to the output 332 of the accumulator, and a delay circuit 334 having a delay time which is equal to the duration of an image signal $T_b$ and whose input is connected to the output of the adder circuit 333 and whose output is connected to the output 332 of the accumulator. Furthermore, this image enhancement circuit includes a difference producing circuit 34, a first input of which is connected to the input 31 of this image enhancement circuit and a second input of which is connected to the output 332 of the accumulator 33. The output of this difference producing circuit 34 is connected via the weighting network 35 to the input 331 of the accumulator.

This weighting network has a weighting factor $k(i)$ dependent on the ordinal number i of the low-quality image signal and with the aid of a switch 36, which can be operated by the user, it can be set to a given starting position and can be maintained in this position if desired, by leaving this switch permanently operated. It will be assumed that the weighting factor in this starting position is equal to $k(0) = 0$. Due to the first synchronising pulse $f_p$ occurring after switch 36 has been brought to the non-conducting state again, i becomes 1 and, starting from the assumption that $k(i) = 1/i$, the first weighting factor becomes equal to $k(1) = 1$. The image signal $\hat{g}_i(n)$ is then stored unchanged in the delay circuit 334. After the occurrence of a further frame synchronising pulse $f_p$, the stored image signal is applied together with $\hat{g}_2(n)$ to the difference producing circuit 34 which then supplies the difference signal $\hat{g}_2(n) - \hat{g}_1(n)$. This difference signal is multiplied by the new weighting factor 1/2 and applied to the adder circuit 333 where the image signal $\hat{g}_1(n)$ is added to this difference signal. The sum signal

$$s_2(n) = \tfrac{1}{2}[\hat{g}_1(n) + \hat{g}_2(n)]$$ thus obtained

is applied to the delay circuit 334 and after the occurrence of the next frame synchronising pulse it is applied as an image signal $h_2(n)$ to the monitor 5 via the digital-to-analogue converter 4. As can be easily derived from the above, it generally holds that:

$$h_i(n) = \frac{1}{i}\sum_{q=1}^{i} \hat{g}_q(n) \qquad (6)$$

4

When at a given moment the quality of the image $H_i(x, y)$ characterized by $h_i(n)$ and visible on the monitor 5 is considered to be sufficient by the user, switch 6 can be brought to the conducting state again so that the image $H_i(x, y)$ does not change anymore. As is evident from equation (6), $h_i(n)$ is the average value at any moment of all image signals $\hat{g}_1(n)$ received until that moment, so that the image $H_i(x, y)$ has an optimum brightness.

An embodiment of the weighting circuit 35 in the case where $k(i) = 1/i$ is shown in Fig. 2. It comprises a counter 3501 of, for example, 16 bits. The frame synchronising pulses $f_p$ are applied to the counting input C. This counter can be reset, for example, by applying a logical "1" to the reset input R. For this purpose switch 36 is provided which is operated by the user. This counter thus supplies the ordinal number i of image signal $g_i(t)$ which is applied to the image enhancement circuit since switch 6 was brought to the conducting stage for the last time. This number i, together with the difference signal provided by the difference producing circuit 34, is applied to a divider circuit 3503 which thus supplies the difference signal weighted with the weighting factor $1/i$.

It is to be noted that the $2^{16}$ frame synchronising pulses that can be counted by this 16-bit counter correspond to 65536 images. Transmission thereof takes approximately 43 minutes. In this case the user must determine within approximately 43 minutes whether there is animage satisfying his wishes.

In the weighting circuit shown in Fig. 2 the starting point is that $k(i) = 1/i$ and that it is therefore provided with a divider circuit 3503. Although divider circuits are generally known, they remain relatively complicated circuits. In addition it takes a relatively long time to carry out a division.

A considerably simpler embodiment of the weighting circuit is obtained by choosing the weighting factors to correspond to equation (4) which leads to the series of weighting factors indicated in equation (5). This choice of the weighting factors does not only considerably simplify the weighting circuit design, but in addition its rate may be considerably higher.

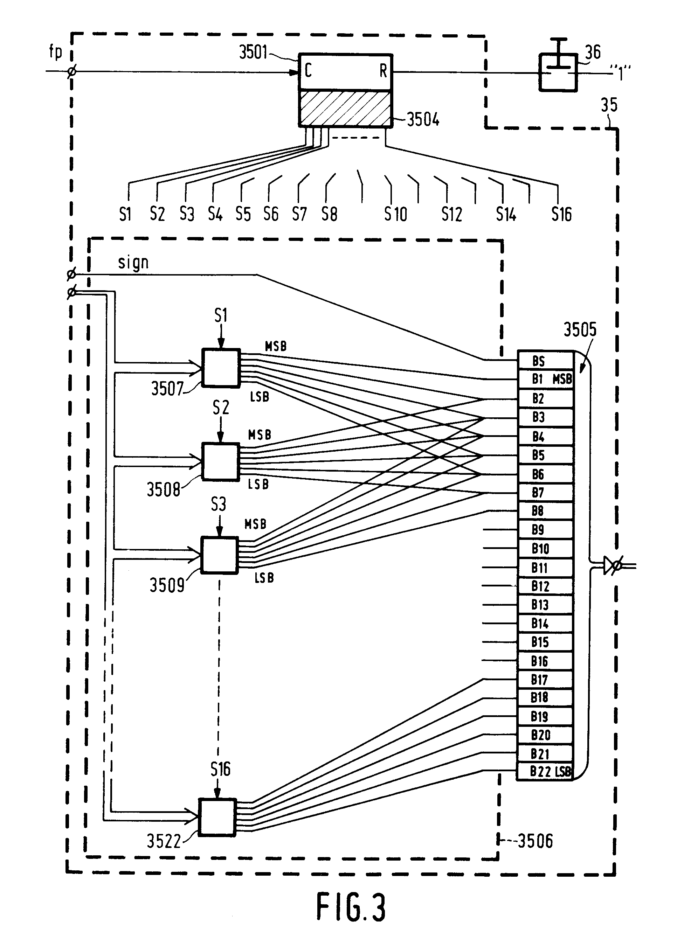

An embodiment of the weighting circuit in which the weighting factors thus chosen are used is shown in Fig.3. In this embodiment it has been assumed for the sake of simplicity that both the difference signal samples, which are supplied by the difference producing circuit 34, and the weighted difference signal samples such as are applied by the weighting circuit are all represented in sign and magnitude and are located between +1 and -1.

The weighting circuit shown in Fig. 3 again comprises the 16-bit counter 3501 which receives the frame synchronising pulses $f_p$ at its counting input C and which can be reset by applying a logical "1" to the reset input R for a short period. Here again switch 36 is provided which is operated by the user, but it only conducts for a short period. A decoding network 3504 having a sixteen outputs indicated by S1 to S16, respectively, is connected to this counter 3501. A logical "1" occurs at output S1 whenever the counting position is one. If thecounting position is two, a logical "1" occurs at the output S2. A logical "1" occurs at the output S3 at each of the counting positions 3, 4, 5 etc. The weighting circuit further includes a 23-bit output register 3505 whose contents (being the weighted difference signal samples) are bit-parallel transmitted to the adder 333 (see Fig. 1). This output register has a bit call for each of the 23 bits. These cells are indicated by BS, B1, B2, ... B22, respectively. Bit cell BS comprises the sign bit, bit cell B1 comprises the most significant bit MSB and bit cell B22 comprises the least significant bit LSB. Of each 7-bit difference signal sample which is supplied by the difference producing circuit 34, the sign bit is directly applied to bit cell BS. The other six magnitude bits are applied via a routing circuit 3506 to certain other bit cells of the output register. To this end this routing circuit includes sixteen gating circuits 3507-3522 each having six inputs for bit-parallel reception of the six magnitude bits. For the sake of completeness the Figure shows at which of the outputs the MSB is present and at which the LSB is present. These gating circuits are controlled by the signals at the outputs of the decoding network 3504. More particularly the six magnitude bits are thereby applied to the bit cells B1-B6 when output S1 has a logical "1". If on the other hand output S2 has a logical "1", these six magnitude bits are applied to the bit cells B2-B7. When output S3 has a logical "1", they are appplied to the bit cells B3-B8, etc. The gating circuits are designed in such a manner that the bit cells that do not receive any of the six magnitude bits receive a logical "0".

It is to be noted that it has been assumed for the sake of simplicity in this embodiment that the different signal samples are represented with sign and magnitude, but that the two-complement representation is generally used in practice.

It is also to be noted that the element 334 (see Fig. 1) which has been indicated as a delay circuit in the foregoing may be designed as a digital image memory.

**Claims**

1. An image enhancement circuit for converting a series of quasi-stationary low-quality image signals into an image signal of high quality, comprising an input (31) for reception of the low-quality image signals; an output (32) at which the high-quality image signal occurs; a difference-producing circuit (34) having a first input coupled to the input of the image enhancement circuit, a second input and an output on which difference image signals are produced; a weighting network (35) for weighting difference image signals applied thereto with a predetermined weighting factor and having an input which is coupled to the output of the difference-producing circuit and having an output; an accumulator circuit (33) having an input (331) coupled to the output of the weighting network (35) and an output (332) coupled to the output (32) of the image enhancement circuit and to the second input of the difference-producing circuit, characterized in that the weighting factor of the weighting circuit (35) depends on the ordinal number of the received difference image signal, and that the actual weighting factor is equal to the reciprocal value of that ordinal number.

2. An image enhancement circuit for converting a series of quasi-stationary low-quality image signals into an image signal of high quality, comprising an input (31) for reception of the low-quality image signals; an output (32) at which the high-quality image signal occurs; a difference-producing circuit (34) having a first input coupled to the input of the image enhancement circuit, a second input and an output on which difference image signals are produced; a weighting network (35) for weighting difference image signals applied thereto with a predetermined weighting factor and having an input which is coupled to the output of the difference-producing circuit and having an output; an accumulator circuit (33) having an input (331) coupled to the output of the weighting network (35) and an output (332) coupled to the output (32) of the image enhancement circuit and to the second input of the difference-producing circuit, characterized in that the weighting factor of the weighting circuit (35) depends on the ordinal number of the received difference image signal, and that the relation between the weighting factor k(i) and the ordinal number i of the received difference image signal is equal to

$$k(i) = 2^{-RND[^2\log i]}$$

where RND[$^2$log i] represents the rounded-off value of $^2$log i.

**Patentansprüche**

1. Bildverbesserungsschaltung zum Umwandeln einer Reihe von quasi-stationären Niederqualitätsbildsignalen in ein Hochqualitätsbildsignal mit einem Eingang (31) zum Empfang der Niederqualitätsbildsignale; einem Ausgang (32), an dem das Hochqualitätsbildsignal auftritt; einer differenzerzeugenden Schaltung (34), mit einem ersten Eingang, der mit dem Eingang der Bildverbesserungsschaltung gekoppelt ist, mit einem zweiten Eingang und mit einem Ausgang, an dem Differenzbildsignale erzeugt werden; mit einem Gewichtungsnetzwerk (35) zum Gewichten der demselben zugeführten Differenzbildsignale mit einem vorgegebenen Gewichtungsfaktor, wobei dieses Netzwerk einen Eingang aufweist, der mit dem Ausgang der differenzerzeugenden Schaltung gekoppelt ist, sowie einen Ausgang; mit einem Akkumulatorsschaltung (33), dessen Eingang (331) mit dem Ausgang des Gewichtungsnetzwerkes (35) gekoppelt ist und dessen Ausgang (332) mit dem Ausgang (32) der Bildverbesserungsschaltung sowie mit dem zweiten Eingang der differenzerzeugenden Schaltung gekoppelt ist, <u>dadurch gekennzeichnet</u>, daß der Gewichtungsfaktor des Gewichtungsnetzwerkes (35) von der <u>Ordnungszahl</u> des empfangenen Differenzbildsignals abhängig ist und daß der Ist-Gewichtungsfaktor dem Reziprokwert dieser Ordnungszahl entspricht.

2. Bildverbesserungsschaltung zum Umwandeln einer Reihe von quasi-stationären Niederqualitätsbildsignalen in ein Hochqualitätsbildsignal mit einem Eingang (31) zum Empfang der Niederqualitätsbildsignale; einem Ausgang (32), an dem das Hochqualitätsbildsignal auftritt; einer differenzerzeugenden Schaltung (34), mit einem ersten Eingang, der mit dem Eingang der Bildverbesserungsschaltung gekoppelt ist, mit einem zweiten Eingang und mit einem Ausgang, an dem Differenzbildsignale erzeugt werden; mit einem Gewichtungsnetzwerk (35) zum Gewichten der demselben zugeführten Differenzbildsignale mit einem vorgegebenen Gewichtungsfaktor, wobei dieses Netzwerk einen Eingang aufweist, der mit dem Ausgang der differenzerzeugenden Schaltung gekoppelt ist, sowie einen Ausgang; mit einem Akkumulatorschaltung (33), dessen Eingang (331) mit dem Ausgang des Gewichtungsnetzwerkes (35) gekoppelt ist und dessen Ausgang (332) mit dem Ausgang (32) der Bildverbesserungsschaltung sowie mit dem zweiten Eingang der differenzerzeugenden Schaltung gekoppelt ist, <u>dadurch gekenn-</u>

6

zeichnet, daß der Gewichtungsfaktor des Gewichtungsnetzwerkes (35) von der Ordnungszahl des empfangenen Differenzbildsignals abhängig ist und daß die Beziehung zwischen dem Gewichtungsfaktor k(i) und der Ordnungszahl i des empfangenen Differenzbildsignal dem nachfolgenden Wert entspricht

$$k(i) = 2^{-RND[^2log\ i]}$$

wobei RND[$^2$log i] der gerundete Wert von $^2$log i ist.

**Revendications**

1. Circuit d'amélioration d'image pour convertir une série de signaux d'image de basse qualité quasi stationnaires en un signal d'image de haute qualité, comprenant une entrée (31) pour la réception des signaux d'image de basse qualité; une sortie (32) à laquelle le signal d'image de haute qualité se présente; un circuit générateur de différence (34) comportant une première entrée couplée à l'entrée du circuit d'amélioration d'image, une seconde entrée et une sortie sur laquelle des signaux d'image de différence sont produits; un réseau pondérateur (35) pour pondérer des signaux d'image de différence qui y sont appliqués au moyen d'un facteur de pondération prédéterminé et comportant une entrée qui est couplée à la sortie du circuit générateur de différence ainsi qu'une sortie; un circuit accumulateur (33) comportant une entrée (331) couplée à la sortie du réseau pondérateur (35) et une sortie (332) couplée à la sortie (32) du circuit d'amélioration d'image et à la seconde entrée du circuit générateur de différence, caractérisé en ce que le facteur de pondération du circuit pondérateur (35) dépend du nombre ordinal du signal d'image de différence reçu, et que le facteur de pondération réel est égal à la valeur réciproque de ce nombre ordinal.

2. Circuit d'amélioration d'image pour convertir une série de signaux d'image de basse qualité quasi stationnaires en un signal d'image de haute qualité, comprenant une entrée (31) pour la réception des signaux d'image de basse qualité; une sortie (32) à laquelle le signal d'image de haute qualité se présente; un circuit générateur de différence (34) comportant une première entrée couplée à l'entrée du circuit d'amélioration d'image, une seconde entrée et une sortie sur laquelle des signaux d'image de différence sont produits; un réseau pondérateur (35) pour pondérer des signaux d'image de différence qui y sont appliqués au moyen d'un facteur de pondération prédéterminé et comportant une entrée qui est couplée à la sortie du circuit générateur de différence, ainsi qu'une sortie; un circuit accumulateur (33) comportant une entrée (331) couplée à la sortie du réseau pondérateur (35) et une sortie (332) couplée à la sortie (32) du circuit d'amélioration d'image et à la seconde entrée du circuit générateur de différence, caractérisé en ce que le facteur de pondération du circuit pondérateur (35) dépend du nombre ordinal du signal d'image de différence reçu, et que la relation entre le facteur de pondération k(i) et le nombre ordinal i du signal d'image de différence reçu est égal à :

$$k(i) = 2^{-RND[^2log\ i]}$$

où RND[$^2$log i] représente la valeur arrondie de $^2$log i.

EP 0 209 180 B1

FIG.1

FIG. 2

FIG.3